# EUROPEAN PATENT SPECIFICATION

(11) **EP 0 687 210 B1**
(45) Date of publication and mention of the grant of the patent: **08.05.2002**
(21) Application number: 94910806.2
(22) Date of filing: 28.02.1994
(51) Int. Cl.: B23D 61/02, B28D 1/12, B24D 5/10

(54) **ABRASIVE CUTTING TOOL**
ABRASIVES SCHNEIDWERKZEUG
OUTIL DE COUPE ABRASIF

(30) Priority: 01.03.1993 US 24649
(43) Date of publication of application: 20.12.1995
(73) Proprietor: ULTIMATE ABRASIVE SYSTEMS, L.L.C., Atlanta, GA 30355 (US)
(72) Inventor: TSELESIN, Naum, N., Atlanta, GA 30355 (US)
(74) Representative: Hansmann, Axel
(86) International application number: US9402247
(87) International publication number: WO9420252

(56) References cited:
- CH-A- 611 202
- DE-U- 8 804 035
- DE-U- 9 110 796
- FR-A- 2 091 496
- GB-A- 580 867
- US-A- 3 176 675
- US-A- 3 537 491
- US-A- 3 742 655
- US-A- 4 679 541
- US-A- 5 049 165
- PATENT ABSTRACTS OF JAPAN vol. 12, no. 247 (M-717) (3094) 13 July 1988 & JP,A,63 034 077 (SANWA DAIYAMONDO KKK) 13 February 1988

## Description

### BACKGROUND OF THE INVENTION

### Field of the Invention

This invention relates generally to cutting tools, according to the precharacterizing portion of claim 1 and to a method for manufacturing an abrasive cutting tool according to the precharacterizing portion of claim 7 respectively; see US-A 3 176 675 and US-A 4 925 457 respectively.

### Discussion of the Prior Art

It is well known in the cutting art, related to such materials as concrete, stone, ceramic, glass, composite materials and the like, to utilize a core such as a disk for a circular saw, a band for a band saw, a link for a chain saw, or strips of metal for gang saws, and to affix a plurality of cutting members to the core. The prior art cutting members typically comprise a matrix material having a plurality of diamonds or other hard, abrasive particles embedded therein. It is also known to make the cutting members wider than the core so the core will not bind within the kerf as the cutting progresses. Using the prior art cutting members, however, the cutting members tend to wear in such fashion that the width of the cutting members is reduced as the cutting progresses, causing the kerf to narrow, and reducing the efficiency of the cutting action.

Prior art efforts at resolving the problem with the cutting members has included variations of the cutting members 'so that more hard particles are in the sides of the member than in the middle so the sides will wear longer to maintain the desired kerf width. Also, various shapes and profiles of cutting members have been devised in an effort to change the wear pattern.

One of the primary difficulties with the prior art cutting members is associated with the fact that the hard particles are not uniformly distributed throughout the matrix material. As one particle is removed from the matrix material during use, support is thereby removed for adjacent particles so adjacent particles are lost without substantial participation in the cutting process. As a result, success of the above mentioned efforts of the prior art to solve the problems associated with the cutting members has been limited.

### SUMMARY OF THE INVENTION

These disadventages are overcome with a cutting tool and a method of manufacturing an abrasive cutting tool having the features of claims 1 and 7 respectively.

The present invention provides cutting members to be mounted on a core for use as a cutting tool. By using the mesh material for locating (i.e. positioning and placing) and supporting the hard particles within the matrix material, there is a minimum loss of hard particles during cutting action so the hard particles are used, rather than simply lost from the cutting member. Furthermore, the cutting members are spaced along the core to provide ample channels for removal of waste and to supply and remove coolant when used. The cutting members in accordance with the present invention may comprise a plurality of shapes and locations to achieve the effect of one cutting member; therefore, the total power for driving the cutting device is reduced, channels for providing coolant and removing coolant and debris are increased, and opportunity is provided to have a greater number of cutting members for some purposes than for others.

### BRIEF DESCRIPTION OF THE DRAWINGS

These and other features and advantages of the present invention will become apparent from consideration of the following specification when taken in conjunction with the accompanying drawings in which:
Fig. 1 is a fragmentary side elevational view showing a circular saw having cutting members made in accordance with the present invention mounted thereon;
Fig. 2 is an enlarged cross-sectional view taken substantially along the line 2--2 in Fig. 1;
Fig. 2A is similar to Fig. 2 but showing a modified form thereof;
Fig. 3 is a cross-sectional view taken substantially along the line 3--3 in Fig. 1;
Fig. 3A is similar to Fig. 3 but showing a modified form thereof;
Fig. 4 is an enlarged cross-sectional view taken substantially along the line 4--4 in Fig. 1;
Fig. 4A is similar to Fig. 4 but showing a modified form thereof;
Figs. 5 and 6 are cross-sectional views similar to Figs. 2 and 4, but showing a modified form of cutting member;
Figs. 7--9 are similar to Figs 2--4 but show another modified form of cutting member;
Figs. 10--12 are similar to Figs 2--4 but showing another modified form of cutting member;
Fig. 13 is a top plan view showing a circular saw having a different form of cutting members mounted thereon;
Figs. 14 is a perspective view showing a cable saw made in accordance with the present invention;
Fig. 15 is a side elevational view showing a modified form of the saw shown in Fig 14;
Fig. 16 is a perspective view showing a block of contoured material as disclosed in US-A 5 190 586.
Fig. 17 is a plan view of the block shown in Fig. 16, and illustrating shapes to be cut from the block;
Figs. 17A, 17B and 17C illustrate cutting members formed from pieces cut from the block shown in Fig. 17;
Fig. 18 is an elevational view showing the cutting edge of a tool made in accordance with the present invention;
Fig. 19 is a front elevational view of a cutting segment made in accordance with the present invention and adapted for subsequent mounting on a core;
Fig. 20 is a fragmentary view showing a plurality of cutting members made in accordance with the present invention and subsequently molded into a core;
Fig. 21 is a fragmentary perspective view showing a modified form of cutting member made in accordance with the present invention; and,
Figs. 22 and 23 are fragmentary views similar to Fig. 18 and showing different modifications thereof.

### DETAILED DESCRIPTION OF THE EMBODIMENTS

Referring now more particularly to the drawings, and to those embodiments of the invention here presented by way of illustration, it should be understood that the hard-particle-containing material utilized in the present invention is a material such as that disclosed in U.S. Patents Nos. 4,925,457, 5,092,910 and 5,049,165. The material be made in accordance with the teachings in US-A 5 203 880, and, the material may conform to that disclosed and claimed in Patent No. 5,190,568. The present invention relates to novel tools utilizing the material disclosed in these applications and patents, and such material will be referred to as mesh material regardless of whether the mesh is an integral part of the composite abrasive material or was removed. However, it should be understood that the present invention may utilize practically any composite abrasive materials (made by mixing, coating and/or agglomeration of abrasive particles with retaining media, sintering, impregnating, curing, gluing, plating, brazing, fusing, depositing, implantation etc., or by any combination of these and other techniques). The success in the utilization of this material is directly associated with concentration, uniformity of distribution of abrasive particles in the matrix material, and with the degree of retention of the abrasive particles in the matrix material. The higher the degree of concentration, uniformity and retention, the more successful will be the utilization of the composite materials in the present invention.

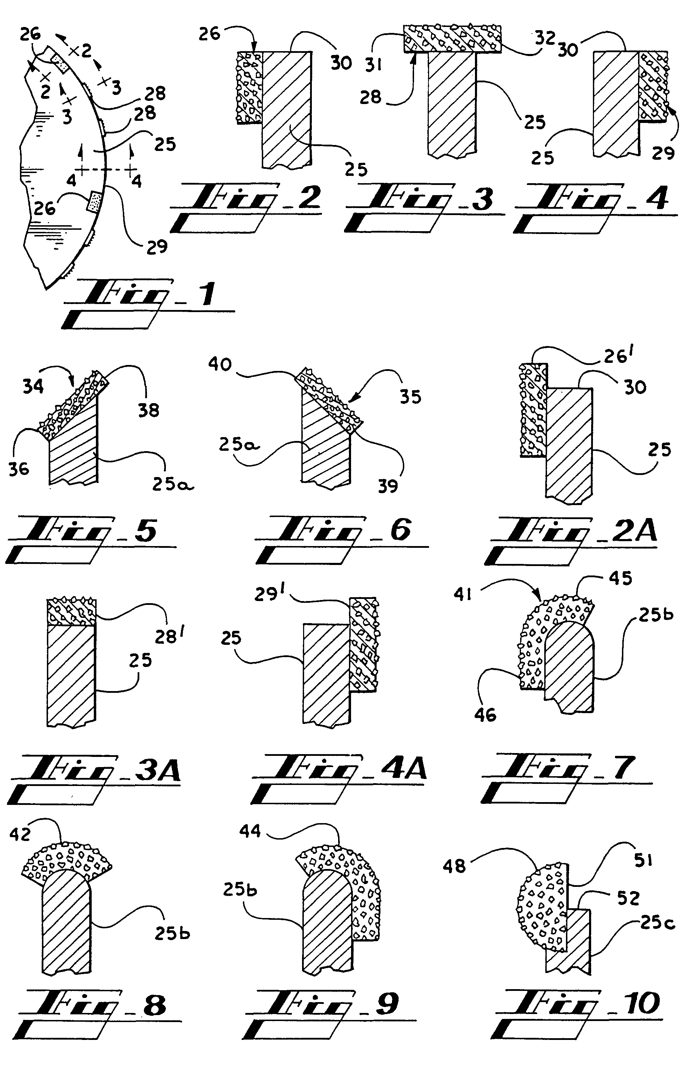

Fig. 1 of the drawings shows a circular saw including a core 25 having a plurality of cutting members fixed to its periphery. Those skilled in the art will understand that it is well known in the art to fix cutting members to the periphery of a core 25; but, the cutting members themselves are unique in the present invention. The readily recognized difference is that the cutting members comprise different profiles which are distributed along the periphery, and the other difference is that the cutting members comprise the above discussed mesh material.

From Fig. 1 it will be seen that there are three different profiles of cutting member, the profiles being designated at 26, 28 and 29 which are shown respectively in Figs. 2, 3 and 4. It will be noticed that there are two successive members 28, and 29 which are shown respectively in Figs. 2, 3 and 4. It will be noticed that there are two successive members 28, and this will be discussed further below.

The cutting member 26 is secured to one side of the core 25, and is substantially aligned with the peripheral edge 30 of the core 25. As a result, the member 26 will cut only the side of the kerf, acting as a gauge keeping member. The cutting member 29 is secured to the opposite side of the core 25, and is essentially the mirror image of member 26. Thus, the member 29 cuts only the opposite side of the kerf.

The cutting member 28 is mounted on the peripheral edge 30 of the core 25, and is used for stock removal, acting at the bottom of the kerf. It will be noticed that the member 28 has a width equal to the sum of the widths of the member 26, the core 25 and the member 29. The cutting member 28 will cut material to provide a kerf; and, as the core 25 moves into the kerf, the members 26 and 29 act as gauge keeping members to maintain the kerf width and assist in protecting the ends 31 and 32 of the stock removal member 28.

Since the cutting member 28 is used for stock removal, one might place more of the members 28 on the core 25 than the members 26 and 29. Thus, as is shown in Fig. 1, there is a member 26, followed by two of the members 28, then one member 29, and the sequence will be repeated throughout the periphery of the core 25. A variation of this design is shown in Figs. 2A, 3A, and 4A. The cutting member 28' has a width approximately equal to the width of the core 25', and the cutting members 26' and 29' cover sides of cutting member 28'. This design provides extra protection against side wearing tool. It should be noticed that members 26, 26' and 29, 29' may have different abrasive particles and concentrations from members 28 and 28'. In most cases, members 26, 29, 26' and 29' will include smaller abrasive particles than members 28 and 28'. This provides smoother surfaces of the cut workpiece.

Though the core 25 shown in Fig. 1 is circular, it should be understood that, using other cores, the use and function of the cutting members 26, 28 and 29 will be the same. Thus, one might place the cutting members along the working edge of a band saw, along the edges of chain saw links, along the edges of gang saws, or even along the working edges of a hole saw, the working edges of a drill or a drill bit. References herein to a core are to be understood in this broad sense.

Considering the operation of the device shown in Figs. 1--4A of the drawings, it will be understood that there will be a plurality of stock removal members 28, 28' distributed along the periphery of the core 25, the members 28, 28' being formed of mesh material to locate or position, and/or to retain, hard particles within the matrix material. The members 28, 28' may also be formed of other abrasive materials wherein a plurality of abrasive particles is distributed tightly and uniformly on the retaining surface. The usual depreciation of a cutting member is in rounding of the corners of the member. First, the use of the mesh material retards loss of hard particles at the corners; and, the gauge members 26, 26' and 29, 29' assist in maintaining the full kerf. Between each of the members 26, 28 and 29, or 26', 28' and 29' there is a space which allows easy removal of debris, and may allow for flow of coolant when used. The cutting members 26, 28 and 29 can be placed separately on a designated tooth of the core 25.

Looking next at Figs. 5 and 6 of the drawings, the core is designated at 25a, and the cutting members are designated at 34 and 35. As in the previously described embodiment, the members 34 and 35 are distributed along the working periphery of the core 25a.

One form of prior art cutting member is arranged so that the outside edges cut first, to yield a V-shape at the bottom of the kerf. The purpose of the V-shape is to keep the cutting device running true, and straight in the kerf. The arrangement shown in Figs. 5 and 6 is similar, but the V-shape is formed by two separated pieces. The cutting member 34 is angled so the inner end 36 will act largely as a gauge keeping surface while the outer end 38 will be used for stock removal. Similarly, the cutting member 35 is angled in the opposite direction and the inner end 39 acts largely as a gauge keeping surface while the outer end 40 will be used primarily for stock removal. It should be understood that the arrangement of the cutting members is not limited to a V-shape, but it can be an X-shape, L-shape etc.

The cutting members 34 and 35 will be distributed along the periphery of a core 25a as shown in Fig. 1; therefore, the above discussed advantages are realized in the flow of coolant and the removal of debris.

Attention is directed to Figs. 7--9 of the drawings which show another modification of the device shown in Figs. 1--4. The core is designated at 25b, and the three cutting members are designated at 41, 42 and 44. In this embodiment of the invention, the member 41 includes a portion 45 at the periphery of the core 25b and a portion 46 at the periphery of the side of the core. Thus, the member 41 both removes stock with the portion 45 and holds the gauge with the portion 46.

The cutting member 42 is substantially at the periphery of the core 25b and is used for stock removal. The final member 44 is the opposite of the member 41 and has a portion 45' for stock removal and a portion 46' for gauge keeping.

It will thus be seen that the members shown in Figs. 7--9 provide three members for stock removal to one gauge keeping member on one side of the core, and one gauge keeping member on the other side of the core. Additionally, since maintenance of a proper kerf with square corners is difficult, this device provides a kerf with a rounded bottom. While the cutting member is not as efficient when the cutting edge is rounded, maintenance of the kerf is easier, so the long-term efficiency is improved.

Figs. 10--12 illustrate another variation of the arrangement shown in Figs. 7--9. The core is designated at 25c, and the cutting members are designated at 48, 49 and 50. Each of the members 48, 49 and 50 is semicircular, but they are oriented differently with respect to the core 25c.

The member 48 is secured at one side of the core 25c, with the straight portion 51 of the semi circle parallel to the side of the core 25c. As a result, one end of the circumference is adjacent to the periphery 52 of the core 25c and will provide some stock removal, while the central portion of the circumference will act as a gauge keeping surface.

The member 49 is secured to the periphery 52 of the core 25c with the straight portion 51' of the semicircle perpendicular to the sides of the core 25c. Thus, the center portion of the semicircle will provide for stock removal while the diametrical ends of the side 51' will provide gauge keeping.

Finally, the member 50 is similar to the member 48 but is fixed at the opposite side of the core 25c. The straight side of the semicircle is designated at 51", and the function will be understood from the discussion of the member 48.

Fig. 13 of the drawings shows another modification in accordance with the present invention. The device shown in Fig. 13 is similar to that shown in Figs. 5 and 6. In Figs. 5 and 6, the cutting members 34 and 35 are placed generally tangentially to the core 25a, then angled to one side or the other of the core. In Fig. 13, the cutting members 54 are placed obliquely, so the members 54 lie along a secant of the core 25d, and are then angled with respect to the secant. As illustrated, successive cutting members 54 can be angled in opposite directions so that the leading edge is successively on the right and left sides of the core 25d.

As a result of the placement of the cutting members 54, only an edge of the members will engage the work piece to effect the cutting. As the cutting members wear away, other portions of the members will contact the work piece. Thus, the cutting members 54 will work effectively until virtually the entire member has been used. All the while, only a small area of each member 54 will contact the work piece, so the power consumption is minimized, and the channels for removal of debris are kept open.

Attention in next directed to Figs. 14 and 15 of the drawings. Both these figures illustrate saws made by attaching a plurality of cutting members to a flexible cable or the like.

In Fig. 14, there is a flexible cable 55, the cable 55 having spaced therealong a plurality of cutting members 56 and 58. All the members 56 and 58 are substantially alike, but the two groups are oriented in opposite directions. The cutting members 56 and 58 are frustoconically shaped, and the members 56 have their bases directed to the left in the drawing, while the members 58 have their bases directed to the right. Such an arrangement will provide equal cutting regardless of the direction of motion of the cable 55.

An alternative arrangement is shown in Fig. 15. The cable 55a has a plurality of cutting members 56a spaced therealong, all the members 56a having their bases directed to the left. The cutting action may therefore be somewhat different, depending on the direction of movement of the cable 55a.

From the above and foregoing description it will be understood that the cutting members 56, 58 and 56a will have at least their surfaces formed of abrasive composite materials which may comprise mesh material as discussed hereinabove. As a result, the members will cut aggressively with a minimum loss of hard particles; and, as the cutting edge is worn away, the adjacent area of the surface will come into play as the cutting edge. This process will continue until the entire cutting member has been used.

Fig. 16 of the drawings shows a piece of material as disclosed in the above Patent No. 5,190,568, the material being designated generally at 59 and having undulations 60. The same material 59 is shown in Fig. 17, and various shapes to be cut from the material 59 are indicated in broken lines. For example, the cutting members 41, 42 and 44 as shown in Figs. 7--9 are shown in Fig. 17 to illustrate one technique for producing such members. Also, the members 48 and 49 are shown, and members 26 and 28 are shown. The material 59 may be made in accordance with the technique disclosed in US-A 5 203 880, may represent a simple (e.g. arcuate) piece or a complicated contoured piece, and may be cut by a laser or the like to provide cutting members as disclosed herein.

Fig. 17 also shows a piece 57 to be cut from the material 59, and it will be noticed that the orientation is such that the length of the piece 57 extends across the undulations, or corrugations, 60. Uses of the resulting piece 57 are shown in Figs. 17A, 17B and 17C.

In Fig. 17A, the cutting member is designated at 57a, and it will be seen that the contoured surface is oriented to be perpendicular to the kerf wall, so the contoured surface is used for stock removal at the bottom of the kerf. The side of the piece 57a are of course in a zig-zag path for maintenance of the wall of the kerf.

The cutting member 57a is fixed to a core 25e by welding or by other known techniques; and as here shown a filler is used between the member 57a and the core 25e.

Fig. 17B illustrates a cutting member 57b rotated 90° from the member 57a. Thus, the zig-zag surface of the member effects stock removal at the bottom of the kerf while the contoured surfaces act as gauge keeping surfaces. The member 57b is fixed to the core 25f by standard techniques.

The arrangement shown in Fig. 17C is a combination of those shown in Figs. 17A and 17B in that two pieces 57c and 57d are fixed to the core 25g. The piece 57d is fixed directly to the core 25g similarly to the piece 57b, so the contoured surfaces act as gauge keeping surfaces. However, the piece 57c is fixed to the zig-zag surface of the piece 57d, so the contoured surface of the piece 57c engages the bottom of the kerf to effect stock removal. A filler may be used between the piece 57c and the piece 57d as illustrated. The filler may comprise a plurality of abrasive particles.

It will be understood by those skilled in the art that an assembly such as that shown in Fig. 17C can be separately assembled, and the filler may be sintered and/or fused, and/or brazed, then the assembly subsequently fixed to a core.

Fig. 18 of the drawings shows a cutting edge of a cutting device. The device shown in Fig. 18 may be the edge of a portion of a band saw or a gang saw, or may represent a straightened edge of a circular saw. The gross conformation of the cutting device is not important. In Fig. 18, there is a core 61 having two undulating cutting members 62 and 64 fixed thereto. As shown in Fig. 18, the cutting members 62 and 64 include arcuate portions 65 connected by straight portions 66. The arcuate portions 65 have their ends fixed to the core 61, and the arc extends out beyond the core itself. The straight portions 66 connect the ends of the arcuate portions, and of course provide additional abrasive material to assist in the cutting.

The arcuate portions 65 may be formed as discussed above, the portions 65 being shown in Fig. 17 by way of illustration. It will therefore be understood that the edges shown in Fig. 18 will act as cutting edges, for stock removal, while the curved sides of the portions 65 will assist in gauge keeping surfaces. It should be understood that the portion 66 may have an arcuate shape as well.

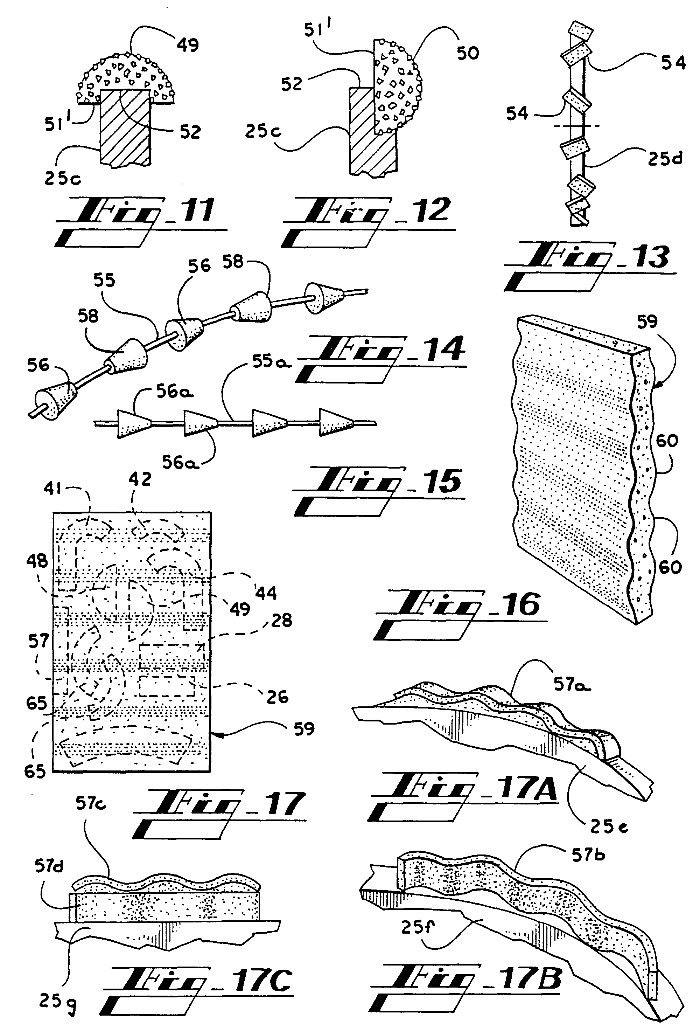

Fig. 19 illustrates a cutting member similar to that shown in Fig. 11; but, the cutting member shown in Fig. 19 is adapted to be made and mounted for ease in subsequent securement to a core. As here illustrated, the cutting member 68 is fixed to a mounting member 69. The mounting member 69 is U-shaped to fit over a core 70, though it will be understood that numerous other shapes can be used. As here shown, the mounting member 69 can be easily attached to the core 70 by tack welds, including welds made by laser.

Fig. 20 shows a modification of the arrangement shown in Fig. 19. In Fig. 20, there are cutting members 71 formed in one of the ways discussed in the above identified patent applications or patents, the members 71 being formed with anchors 72 integral therewith. The core 74 may be a resinous material, composite materials, or metal, so long as the segments 71 are not damaged by the molding process.

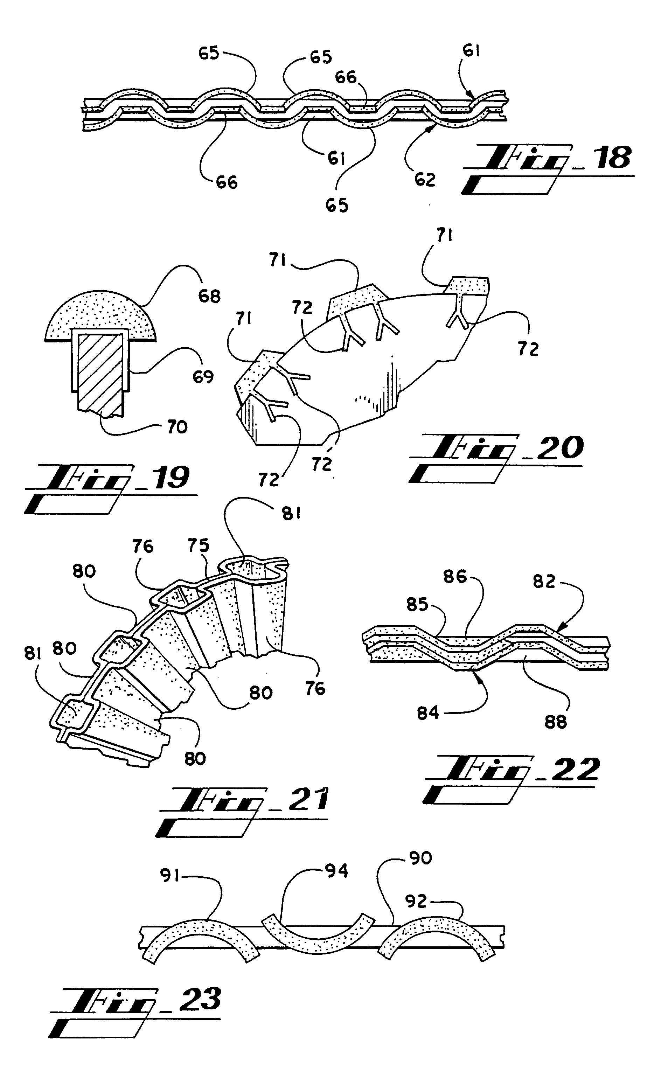

Fig. 21 shows a fragmentary portion of a circular saw blade, but the conformation is not limited to circular saws. The device in Fig. 21 is formed by placing two pieces of corrugated material together, and the result is a central, discontinuous web 75 with interspersed tubular members 76. From the above discussion, it will be realized that this configuration provides cutting along the edge 78, while the sides 79 of the tubular members 76 act as gauge keeping surfaces. Further, debris can be removed in the valleys 80 between the tubular members 76 as well as through the openings 81 in the tubular members 76. Coolants and/or lubricants can be supplied through the openings 81 and valleys 80.

The structure illustrated in Fig. 21 is further usable as a grinding member. The sides 79 of the tubular members can act as the stock removal portion of the device, while the valleys 80 allow removal of debris. The shape of the device when used as a grinding device may be almost infinitely varied; and, whether used as a cutting or grinding device, the tubular members 76 may be generally rectangular as shown, or may be round, elliptical or polygonal.

A plurality of the structures illustrated in Fig. 21 can be put together in such a way as to provide greater thickness of the tool. In this case, honeycomb-like structures of abrasive materials are formed. This structure can be formed by direct manufacture, or by manufacturing contoured parts and subsequently assembling the parts by brazing, fusing, gluing or welding. The welding can include laser and electron beam welding as well as the more conventional techniques. The resulting structures can be used in grinding wheels, routers, reamers, drills and the like. A honeycomb surface may perform stock removal and/or gauge keeping functions. The openings 81 can be used to deliver coolants, lubricants or surface-active material, such as neutral or reducing gas to the working zone. Further, the openings 81, and/or valleys 80, can be filled with a variety of materials, including solids, porous or powdered materials, pastes and plastic materials, fabrics, advanced composite materials and the like, and combinations of any of such materials. The materials can function as a lubricant (e.g. molybdenum disilicide, graphite, glass), as a carrier for a lubricant or other medium to be delivered to the working zone, and as a reinforcement of the honeycomb structure.

Fig. 22 illustrates a variation of the arrangement shown in Fig. 18. In Fig. 22, the cutting members 82 and 84 are formed of straight segments, but the general conformation is the same as in Fig. 18. Additionally, there is a filler 85 between the two cutting members 82 and 84. There may also be a filler 86 in the valleys of the cutting members, fixed to the core 88. The fillers 85 and 86 are partially broken away to show the core 88. The fillers can include abrasive particles of the same or different nature, size and concentrations as in the cutting members 82 and 84. The member 84 may have a round shape similar to that shown in Fig. 18. The member 84 can be eliminated and the member 82 will form a contoured surface.

Fig. 23 illustrates a cutting member that can be thought of as a variation of the device shown in Fig. 18, or the device shown in Fig. 22. In Fig. 23, the induvidual shapes to form the cutting member are as shown at 65 in Fig. 17; however, the pieces are substantially centered on the core. The core in Fig. 23 is designated at 90, and the cutting members are designated at 91, 92 and 94.

Whereas the pieces 65 in Fig. 18 have their ends on the core and the arcuate portions extending beyond the sides of the core, the pieces 91, 92 and 94 are substantially centered on the core 90, with the ends at one side of the core 90, and the arcuate portion at the other side of the core 90. Further, successive pieces are reversed with respect to the immediately preceding piece. Thus, the members 91 and 92 have their ends at one side of the core 90, while the member 94 has its ends at the opposite side of the core 90. It should be understood that the ends of members 94 can be positioned within members 91 and 92.

It will therefore be understood that the arrangement shown in Fig 23 provides, effectively, a zig-zag pattern on the stock removal surface of the cutting member, though the zig-zag pattern is discontinuous. While the specific features are different, the general operation is substantially the same as for the devices shown in Figs. 18 and 22. In all cases, there is a zig-zag pattern for stock removal and a contoured surface for gauge keeping.

It will therefore be seen that the present invention provides cutting members that provide efficient cutting, and maintain kerf width while making minimum power demands. The cutting members are designed to be long lasting for full use of the diamonds or other hard particles utilized in the cutting members.

It will of course be understood by those skilled in the art that the particular embodiments of the invention here presented are by way of illustration only, and are meant to be in no way restrictive; therefore, numerous changes and modifications may be made, without departing from the scope of the invention as outlined in the appended claims.

## Claims

1. A cutting tool comprising a core (25), a working edge (30) of said core (25) and a plurality of cutting members (26, 28, 29) structurally independent of said core (25) and shaped to be fixed to said core (25), each of said cutting members (26, 28, 29) being fixed to and arranged along said working edge (30) of said core (25) for engaging a workpiece and cutting a kerf therein having a bottom and opposed sides, said core (25) having first and second sides extending perpendicular to and on either side of said working edge (30), at least some of said cutting members (26, 28, 29) having at least a portion (36) extending beyond at least one of said first and second sides of said core (25) in a direction normal thereto and being fixed to said core (25) so that the cutting members (26, 28, 29) engage opposed sides of the kerf and act as gauge keeping members, at lest some of said cutting members (26, 28, 29) including a stock removal portion (38) for engaging the bottom of said kerf, said cutting members (26, 28, 29) being fixed to said core (25) so that the stock removal portion (38) of said cutting members (26, 28, 29) have a width extending along the working edge (30) of said core (25), the effective total width of said stock removal portion (38) of the cutting members (26, 28, 29) being substantially equal to the width of said kerf,
**characterized by**
each of said cutting members (26, 28, 29) being cut out from a corrugated sheet of an abrasive material (59) comprising a sintered retaining matrix material having a plurality of abrasive particles embedded therein, said particles being orderly distributed in a non-random pattern in the matrix material by means of a mesh material.

2. The cutting tool of claim 1, wherein each of said cutting members (54) has a first portion extending beyond the first side of said core (25d) in a direction normal thereto and a second portion extending beyond the second side of said core (25c) for engaging the opposed sides of the kerf and acting as gauge keeping members, said cutting members (54) further including a stock removal portion between said first and second portions for engaging the bottom of said kerf, said stock removal portion having a width extending along the working edge (52) of said core (25d), the effective total width of said stock removal portion of the cutting members (54) being equal to the width of said kerf.

3. The cutting tool of claim 2, including a plurality of first and second portions in each cutting member (57b, 57d), wherein said plurality of first portions define first channels therebetween, and said plurality of second portions define second channels therebetween.

4. The cutting tool of claim 1, including a pair of members (62, 64 and 82, 84) extending generally parallel to each other which together provide said portions for each cutting member, and further including a filler (85) between said pair of members.

5. The cutting tool of claim 1, wherein said stock removal portion has a zigzag configuration to provide said effective total width.

6. The cutting tool of claim 1, wherein the mesh material is incorporated in said sheet of abrasive material (59) and is a part of said cutting members (26, 28, 29).

7. A method for manufacturing an abrasive cutting tool from an abrasive material workblank (59), which workblank comprises a sintered retaining matrix material having a plurality of abrasive particles embedded therein that have been orderly distributed in a non-random pattern in the matrix material by means of a mesh material, said method comprising the steps of providing a sheet of said abrasive material workblank (59) and fixing a plurality of cutting members (26, 28, 29) to a core (25),
**characterized in that**
- said sheet of abrasive material workblank (59) is in the form of a corrugated sheet and
- said plurality of cutting members (26, 28, 29) shaped to be fixed to said core (25) of the cutting tool is cut out from said corrugated sheet.

8. The method of claim 7, wherein the step of cutting out said sheet comprises cutting said sheet by means of laser cutting, water jet cutting, electrical erosion cutting or combinations thereof.

9. The method of claim 8, wherein the sheet is cut out to provide said cutting members by laser cutting.

10. The method of claim 7, wherein the plurality of cutting members (26, 28, 29) are fixed to the core (25) by welding, laser welding, brazing, gluing, or combinations thereof.

11. The method of claim 7, wherein the mesh material is incorporated in said abrasive material workblank (59) and is a part of said cutting members (26, 28, 29).

## Patentansprüche

1. Schneidwerkzeug umfassend einen Kern (25), eine Arbeitskante (30) des Kerns (25) und mehrere Schneidelemente (26, 28, 29), die baulich unabhängig von dem Kern (25) ausgebildet und derart geformt sind, dass sie an dem Kern (25) befestigt werden können, wobei jedes Schneidelement (26, 28, 29) an der Arbeitskante (30) des Kerns (25) befestigt sowie entlang dieser angeordnet ist, um an ein Werkstück anzugreifen und in dieses eine Kerbe mit einem Boden und gegenüberliegenden Seiten zu schneiden, wobei der Kern (25) eine erste und eine zweite Seite aufweist, die sich senkrecht zu und auf jeder Seite der Arbeitskante (30) erstrecken, wenigstens einige der Schneidelemente (26, 28, 29) wenigstens einen Bereich (36) aufweisen, der sich über wenigstens eine der ersten und der zweiten Seite des Kerns (25) hinaus in einer Richtung senkrecht zu diesen erstreckt und derart an dem Kern (25) befestigt ist, dass die Schneidelemente (26, 28, 29) an die gegenüberliegenden Seiten der Kerbe angreifen sowie als Maßhalteelemente wirken und wenigstens einige der Schneidelemente (26, 28, 29) einen Materialabtragbereich (38) zum Angreifen an den Boden der Kerbe umfassen, wobei die Schneidelemente (26, 28, 29) derart an dem Kern (25) befestigt sind, dass der Materialabtragbereich (38) der Schneidelemente (26, 28, 29) eine Breite aufweist, die sich entlang der Arbeitskante (30) des Kerns (25) erstreckt, wobei die wirksame Gesamtbreite des Materialabtragbereichs (38) der Schneidelemente (26, 28, 29) im wesentlichen gleich der Breite der Kerbe ist,
**dadurch gekennzeichnet, dass**
jedes Schneidelement (26, 28, 29) aus einer gewellten Platte aus einem Abrasivmaterial (59) ausgeschnitten ist, welches ein gesintertes Rückhaltematrixmaterial umfaßt, in welchem mehrere Abrasivpartikel eingebettet sind, wobei die Partikel mit Hilfe eines Gittermaterials gleichmäßig in einem nicht zufälligen Muster in dem Matrixmaterial verteilt sind.

2. Schneidwerkzeug nach Anspruch 1, wobei jedes der Schneidelemente (54) einen ersten Bereich, der sich über die erste Seite des Kerns (25d) hinaus in einer Richtung senkrecht zu dieser erstreckt, und einen zweiten Bereich, der sich über die zweite Seite des Kerns (25c) hinaus erstreckt, aufweist, um an die gegenüberliegenden Seiten der Kerbe anzugreifen und als Maßhalteelemente zu wirken, wobei die Schneidelemente (54) des weiteren zwischen dem ersten und dem zweiten Bereich einen Materialabtragbereich zum Angreifen an den Boden der Kerbe aufweisen, wobei der Materialabtragbereich eine Breite hat, die sich entlang der Arbeitskante (52) des Kerns (25d) erstreckt, und wobei die wirksame Gesamtbreite des Materialabtragbereichs der Schneidelemente (54) gleich der Breite der Kerbe ist.

3. Schneidwerkzeug nach Anspruch 2, umfassend mehrere erste und zweite Bereiche an jedem Schneidelement (57b, 57d), wobei die mehreren ersten Bereiche zwischen sich erste Kanäle bilden und die mehreren zweiten Bereiche zwischen sich zweite Kanäle bilden.

4. Schneidwerkzeug nach Anspruch 1, umfassend ein Paar Elemente (62, 64 und 82, 84), die sich im wesentlichen parallel zueinander erstrecken und die zusammen die Bereiche für jedes Schneidelement bilden, und des weiteren ein Füllmaterial (85) zwischen den beiden Elementen.

5. Schneidwerkzeug nach Anspruch 1, wobei der Materialabtragbereich eine Zickzack-Form aufweist, um die wirksame Gesamtbreite zu bilden.

6. Schneidwerkzeug nach Anspruch 1, wobei das Gittermaterial in die Platte aus Abrasivmaterial (59) integriert ist und einen Teil der Schneidelemente (26, 28, 29) bildet.

7. Verfahren zur Herstellung eines abrasiven Schneidwerkzeugs aus einem Abrasivmaterialrohling (59), der ein gesintertes Rückhaltematrixmaterial umfaßt, in welchem mehrere Abrasivpartikel eingebettet sind, die mit Hilfe eines Gittermaterials gleichmäßig in einem nicht zufälligen Muster in dem Matrixmaterial verteilt wurden, wobei das Verfahren die Schritte des Bereitstellens einer Platte aus dem Abrasivmaterialrohling (59) und des Befestigens mehrerer Schneidelemente (26, 28, 29) an einem Kern (25) umfaßt,
**dadurch gekennzeichnet, dass**
- die Platte aus dem Abrasivmaterialrohling (59) in der Form einer gewellten Platte vorliegt und
- die mehreren Schneidelemente (26, 28, 29), die derart geformt sind, dass sie an dem Kern (25) des Schneidwerkzeugs befestigt werden können, aus der gewellten Platte ausgeschnitten werden.

8. Verfahren nach Anspruch 7, wobei der Schritt des Ausschneidens aus der Platte das Schneiden der Platte mittels Laserschneiden, Wasserstrahlschneiden, Schneiden mittels elektrischer Erosion oder Kombinationen dieser Verfahren umfaßt.

9. Verfahren nach Anspruch 8, wobei die Platte ausgeschnitten wird, um die Schneidelemente mittels Laserschneiden zur Verfügung zu stellen.

10. Verfahren nach Anspruch 7, wobei die mehreren Schneidelemente (26, 28, 29) mittels Schweißen, Laserschweißen, Löten, Kleben oder Kombinationen dieser Verfahren an dem Kern (25) befestigt werden.

11. Verfahren nach Anspruch 7, wobei das Gittermaterial in den Abrasivmaterialrohling (59) integriert ist und einen Teil der Schneidelemente (26, 28, 29) bildet.

## Revendications

1. Outil de coupe comprenant une partie centrale (25), un bord actif (30) de ladite partie centrale (25) et une pluralité d'éléments de coupe (26, 28, 29) indépendants structurellement de ladite partie centrale (25) et formés pour être fixés sur ladite partie centrale (25), chacun desdits éléments de coupe (26, 28, 29) étant fixé à et agencé le long dudit bord actif (30) de ladite partie centrale (25) pour venir en prise avec une pièce à usiner et réaliser une entaille à l'intérieur ayant un fond et des côtés opposés, ladite partie centrale (25) ayant des premier et second côtés s'étendant perpendiculairement à et des deux côtés dudit bord actif (30), au moins certains desdits éléments de coupe (26, 28, 29) ayant au moins une partie (36) s'étendant au-delà d'au moins un desdits premier et second côtés de ladite partie centrale (25) dans une direction normale à celle-ci et fixée à ladite partie centrale (25), de telle sorte que les éléments de coupe (26, 28, 29) viennent en prise avec les côtés opposés de l'entaille et agissent comme des éléments de maintien du calibre, au moins certains desdits éléments de coupe (26, 28, 29) comprenant une partie retirant la matière (38) destinée à venir en prise avec le fond de ladite entaille, lesdits éléments de coupe (26, 28, 29) étant fixés à ladite partie centrale (25), de telle sorte que la partie retirant la matière (38) desdits éléments de coupe (26, 28, 29) a une largeur s'étendant le long du bord actif (30) de ladite partie centrale (25), la largeur totale effective de ladite partie retirant la matière (38) des éléments de coupe (26, 28, 29) étant sensiblement égale à la largeur de ladite entaille, **caractérisé en ce que** chacun desdits éléments de coupe (26, 28, 29) qui sont découpés à partir d'une feuille ondulée de matériau abrasif (59) comprenant un matériau matriciel de retenue fritté ayant une pluralité de particules abrasives noyées dans celui-ci, lesdites particules étant distribuées dans l'ordre selon un motif non aléatoire dans le matériau matriciel au moyen d'un matériau à mailles.

2. Outil de coupe selon la revendication 1, dans lequel chacun desdits éléments de coupe (54) a une première partie s'étendant au-delà du premier côté de ladite partie centrale (25d) dans une direction normale à celle-ci et une seconde partie s'étendant au-delà du second côté de ladite partie centrale (25c) pour venir en prise avec les côtés opposés de l'entaille et agissant comme des éléments de maintien de calibre, lesdits éléments de coupe (54) comprenant en outre une partie de retrait de matière entre lesdites première et seconde parties pour venir en prise avec le fond de ladite entaille, ladite partie de retrait de matière ayant une largeur s'étendant le long du bord actif (52) de ladite partie centrale (25d), la largeur totale effective de ladite partie de retrait de matière des éléments de coupe (54) étant égale à la largeur de ladite entaille.

3. Outil de coupe selon la revendication 2, comprenant une pluralité de première et seconde parties dans chaque élément de coupe (57b, 57d), dans lequel ladite première pluralité de premières parties définit entre elles des premiers canaux, et ladite pluralité de secondes parties définit entre elles des seconds canaux.

4. Outil de coupe selon la revendication 1, comprenant une paire d'éléments (62, 64 et 82, 84) s'étendant généralement parallèlement l'un à l'autre qui fournissent ensemble lesdites parties pour chaque élément de coupe, et comprenant en outre une charge (85) entre ladite paire d'éléments.

5. Outil de coupe selon la revendication 1, dans lequel ladite partie de retrait de matière a une configuration en zigzag pour fournir ladite largeur totale effective.

6. Outil de coupe selon la revendication 1, dans lequel le matériau à mailles est incorporé dans ladite feuille de matériau abrasif (59) et fait partie desdits éléments de coupe (26, 28, 29).

7. Procédé pour fabriquer un outil de coupe abrasif à partir d'une ébauche de travail (59) en matériau abrasif, laquelle ébauche de travail comprend un matériau matriciel de retenue fritté ayant une pluralité de particules abrasives noyées dans celui-ci, lesdites particules étant distribuées dans l'ordre selon un motif non aléatoire dans le matériau matriciel au moyen d'un matériau à mailles, ledit procédé comprenant les étapes consistant à fournir une feuille de ladite ébauche de travail en matériau abrasif (59) et à fixer une pluralité d'éléments de coupe (26, 28, 29) sur une partie centrale (25), **caractérisé en ce que**
- ladite feuille d'ébauche en matériau abrasif (59) se présente sous la forme d'une feuille ondulée et
- ladite pluralité d'éléments de coupe (26, 28, 29) formés pour être fixés sur ladite partie centrale (25) de l'outil de coupe est découpée à partir de ladite feuille ondulée.

8. Procédé selon la revendication 7, dans lequel l'étape consistant à découper ladite feuille comprend la découpe de ladite feuille par une coupe au laser, la découpe par jet d'eau, la découpe par érosion électrique ou des combinaisons de celles-ci.

9. Procédé selon la revendication 8, dans lequel la feuille est découpée par découpe au laser pour fournir lesdits éléments de coupe.

10. Procédé selon la revendication 7, dans lequel la pluralité d'éléments de coupe (26, 28, 29) est fixée sur la partie centrale (25) par soudage, soudage au laser, brasage, collage ou des combinaisons de ces techniques.

11. Procédé selon la revendication 7, dans lequel le matériau à mailles est incorporé dans ladite ébauche de travail en matériau abrasif (59) et est une partie desdits éléments de coupe (26, 28, 29).
